# EUROPEAN PATENT SPECIFICATION

(11) **EP 4 049 951 B1**
(45) Date of publication and mention of the grant of the patent: **21.05.2025**
(21) Application number: 21721383.4
(22) Date of filing: 15.01.2021
(51) Int. Cl.: B65G 53/50, B65G 53/04, B65G 47/19, B65G 69/06, B65G 53/46

(54) **FEEDING MACHINE CAPABLE OF STABILIZING FLOW**
STABILISIERENDE FLUSSZUFÜHRUNG
MACHINE D'ALIMENTATION CAPABLE DE STABILISER UN ÉCOULEMENT

(43) Date of publication of application: 31.08.2022
(73) Proprietor: Henan Fengbo Automation Co., Ltd., Zhengzhou, Henan 450016 (CN)
(72) Inventor: YANG, Dezhu, Zhengzhou Henan 450016 (CN); CHEN, Lixin, Zhengzhou Henan 450016 (CN); LIU, Wenfei, Zhengzhou Henan 450016 (CN)
(74) Representative: Novagraaf International SA
(86) International application number: PCT/CN2021/072074
(87) International publication number: WO 2022/151329

(56) References cited:
- CN-A- 111 854 899
- CN-A- 111 854 899
- CN-U- 205 838 032
- CN-U- 205 838 032
- CN-U- 206 013 920
- CN-U- 210 854 444
- CN-Y- 2 312 917
- JP-A- H08 133 474
- US-A- 2 262 094
- US-A- 4 808 042

## Description

### TECHNICAL FIELD

The present disclosure generally relates to a stabilizing flow feeder.

### BACKGROUND

There are scenes of conveying powder materials in industrial production. Taking a cement-producing process as an example, feeding and batching steps for powder materials such as coal powder, raw material powder, mineral powder, flyash, and kiln dust are included. An impeller feeder, a spiral conveyor, a rotor scale or the like are generally used in these steps to achieve metered delivery of powder materials. Due to technology or the feeding device itself, the process of delivering the powder materials is prone to problems such as feeding fluctuations such as material flush and interruption of feeding.

For example, due to the limitations of structural form of the impeller feeder, size of an inlet of the impeller feeder is limited so that the amount of the powder materials received by it is small, the interruption of feeding is liable to occur. As a result, uneven reception of the powder materials causes large fluctuation. Furthermore, there is only one blade participating material retention between a bin of the impeller feeder and the impeller, and a gap between the blades and a cylindrical wall of the bin is too large. These problems cause an undesirable material retaining effect. The spiral conveyor is also confronted with problems such as a small opening of the inlet and undesirable material-retaining effect between spiral blades. Due to the structural form of the rotor scale, the inlet of the rotor scale can only be laterally provided on one side, and the rotor scale is also confronted with problems such as a small amount of received powder materials, likelihood to interruption of feeding and even large feeding fluctuations.

There are further some processes of delivering powder materials in a positive pressure pneumatic delivery manner downstream the feeding device. A delivery air flow is likely to blow reversely into the feeding device so that the powder materials cannot smoothly enter a downstream delivery step, but circulate in the feeding device or pile up at an outlet of the feeding device. This causes a deviation to exist between an actual amount of delivered materials and an amount of delivered materials as displayed by the feeding device, thereby causing feeding fluctuations.

Therefore, it is necessary to provide a stabilizing flow feeder which at least partially solves the above problems.

US 2,262,094 A discloses features falling under the preamble of claim 1. CN 205 838 032 U and CN 210 854 444 U are further prior art.

### SUMMARY

An objective of the present disclosure is to provide a stabilizing flow feeder to solve problems about feeding fluctuations such as material flush or interruption of feeding during delivery of powder material.

The invention is defined by claim 1.

According to an aspect of the present disclosure, the stabilizing flow feeder comprises:
an agitating bin provided with an upward opening at the top and configured to receive powder material, an agitating device rotatable about a vertical axis of the agitating bin being disposed in an interior of the agitating bin;
a feeding bin located below the agitating bin, a top of the feeding bin being provided with an inlet communicated with a bottom of the agitating bin, a bottom of the feeding bin being provided with an outlet, an interior of the feeding bin being provided with a feeding impeller rotatable about the vertical axis, the inlet and the outlet being staggered in a circumferential direction around the vertical axis;
a driving device configured to drive the agitating device and the feeding impeller to rotate; and
an air flow-assisting device having a flow-assisting air path disposed in a top wall of the feeding bin, the flow-assisting air path being air-communicated with the feeding bin and configured to generate, from above the outlet, a flow-assisting air flowing outward through the outlet.

According to the present solution, the agitating device may allow the powder material to maintain fluidity and avoid dead spots caused by pile-up. Furthermore, the flow-assisting air generated by the air flow-assisting device may overcome a reverse blow action exerted by the delivery air flow of a delivery device located downstream of the stabilizing flow feeder so that the powder material can smoothly enter the downstream delivery device from the stabilizing flow feeder, thereby making the powder material flow stably and evenly, reducing the feeding fluctuations and making the metering of the delivery amount accurate.

In an embodiment, the agitating device comprises an agitating shaft and at least two sets of agitating rods extending radially with the agitating shaft as a center, wherein the agitating rods in different sets are disposed spaced-apart in a height direction of the vertical axis.

With the present solution, the agitating rods spaced apart in the height direction may enhance the overall agitating effect.

In an embodiment, an end of the agitating rod is provided with a wall scraping plate perpendicular to the agitating rod.

With the present solution, the wall scraping plate may sweep and scrape the powder material adhered to the side wall of the agitating bin.

In an embodiment, the agitating rod and/or the wall scraping plate are provided with a resistance reducing structure on their respective front sides in a rotation direction.

With the present solution, the resistance reducing structure may reduce the resistance upon rotation of the agitating device.

In an embodiment, a sweeping device capable of rotating around the vertical axis is further provided in the agitating bin, the sweeping device is disposed below the agitating device and includes sweeping blades disposed symmetrically about the vertical axis, and the sweeping blades abut against a bottom wall of the agitating bin.

With the present solution, the sweeping device may sweep the powder material on the bottom wall of the agitating bin at a position opposed to the inlet of the feeding bin in the radial direction perpendicular to the vertical axis into the feeding bin, to avoid the dead spots caused by pile-up of the powder material, and the sweeping blades may also function to agitate the powder material to maintain fluidity to a certain degree.

In an embodiment, the sweeping device comprises a sweeping sleeve, and the sweeping blades are connected to the sweeping sleeve and extend radially with the sweeping sleeve as a center.

With the present solution, the structure of the sweeping device is simple and easy to implement.

In an embodiment, the feeding impeller comprises:
an impeller sleeve;
a plurality of blades extending radially outward with the impeller sleeve as a center; and
a rim connected to ends of adjacent blades to form a fan-shaped or a fan annular-shaped section.

With the present solution, the fan-shaped or fan annular-shaped section is formed between the blades of the feeding impeller to better receive the powder material.

In an embodiment, gaps between the feeding impeller and a bottom wall, a top wall and a side wall of the feeding bin are not greater than 2 mm.

With the present solution, the above gaps are small, and the powder material may fill therein to play a shielding role to avoid the running of the powder material and air through the bin, so an excellent material retaining effect is provided.

In an embodiment, an opening angle of the inlet in a circumferential direction around the vertical axis is in a range of 30° to 300°, and/or a size of the inlet in a radial direction perpendicular to the vertical axis is in a range of 200 mm to 3000 mm.

With the present solution, the inlet has a large size to allow more powder material to pass therethrough simultaneously, avoid the case of interruption of feeding and ensure the powder material filling rate of the feeding impeller.

According to the invention, the stabilizing flow feeder comprises at least two feeding bins which are disposed stacked in an up-and-down direction, the outlet of an upper feeding bin is communicated with the inlet of a lower feeding bin, and the flow-assisting air path is disposed in the lowermost feeding bin.

With the present solution, the plurality of feeding bins disposed stacked may significantly reduce a reverse blow action of the reversely-blown air flow and further improve the material-retaining effect.

In an embodiment, an air flow passage is disposed in a top wall of the lowermost feeding bin of the stabilizing flow feeder, air outlets communicated with the air flow passage are disposed at a position of the top wall aligned with the outlet, and the air flow passage and the air outlets constitute at least a portion of the flow-assisting air path.

With the present solution, the flow-assisting air path is formed by the air flow passage and air outlets in the top wall, and may make the structure compact and avoid interference with the rotary motion of the feeding impeller.

The present invention can well solve the problem of interruption of feeding due to undesirable fluidity of the powder material, and solve the problem of material flush due to excessive fluidity.

### BRIEF DESCRIPTION OF THE DRAWINGS

For the sake of better understanding on the above and other objectives, features, advantages, and functions of the present disclosure, the preferred embodiments are provided with reference to the drawings. The same reference symbols refer to the same components throughout the drawings. It would be appreciated by those skilled in the art that the drawings are merely provided to illustrate preferred embodiments of the present disclosure, without suggesting any limitation to the protection scope of the present disclosure, and respective components therein are not necessarily drawn to scale.
Fig. 1 is a vertical sectional view of a stabilizing flow feeder according to a first example not falling under claim 1;
Fig. 2 is a perspective view of an agitating device of the stabilizing flow feeder shown in Fig. 1;
Fig. 3 is a perspective view of a sweeping device of the stabilizing flow feeder shown in Fig. 1;
Fig. 4 is a perspective view of a feeding impeller of the stabilizing flow feeder shown in Fig. 1; and
Fig. 5 is a vertical sectional view of a stabilizing flow feeder according to a first embodiment of the present invention.

List of reference signs
1 stabilizing flow feeder
10 agitating bin
11 agitating bin opening
12 agitating device
121 agitating shaft
122 agitating rod
123 wall scraping plate
124 resistance reducing structure
13 sweeping device
131 sweeping sleeve
132 sweeping blade
133 reinforcing rib
14 agitating bin inspection port
20/220 feeding bin
21 inlet
22/222 outlet
23 feeding impeller
231 impeller sleeve
232 bade
233 rim
24 feeding bin top wall
25 feeding bin bottom wall
26 feeding bin side wall
227 feeding bin partition plate
228 partition plate opening
30 air flow-assisting device
32 air outlet
31 air flow passage
40 driving device
41 driving sleeve
42 driving spindle
50 discharge pipe
51 discharge pipe inspection port
AX vertical axis
2 stabilizing flow feeder

### DESCRIPTION OF THE EMBODIMENTS

Reference now will be made to the drawings to describe embodiments of the present disclosure. What will be described herein are only preferred embodiments according to the present disclosure. On the basis, those skilled in the art would envision other embodiments of the present disclosure which all fall into the scope of the present disclosure.

The present disclosure provides a stabilizing flow feeder for delivering powder material. For example, the stabilizing flow feeder may be used for steps of feeding and batching powder materials such as coal powder, raw material powder, mineral powder, flyash, and kiln dust during production of cement, so as to solve problem about feeding fluctuations such as interruption of feeding or material flush during delivery of the powder material.

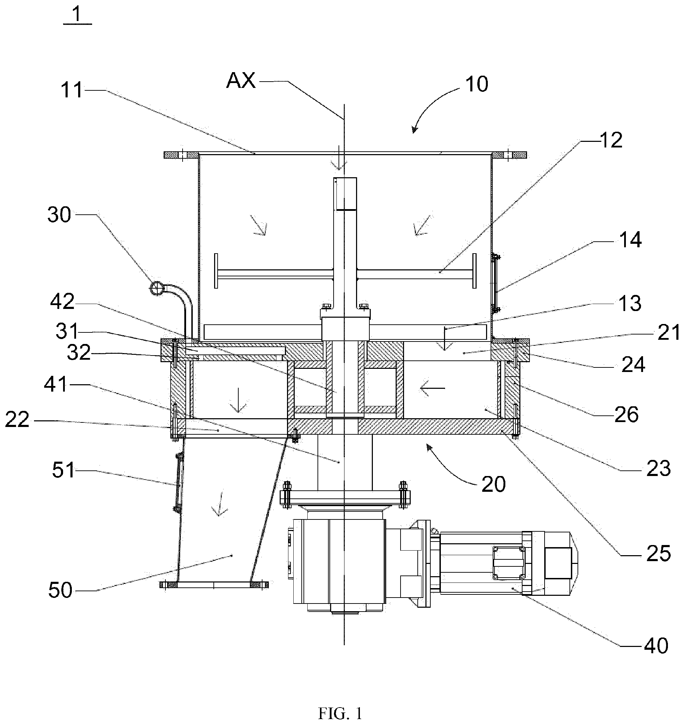

As shown in Fig. 1, the stabilizing flow feeder 1 according to a first example includes an agitating bin 10, a feeding bin 20, an air flow-assisting device 30 and a driving device 40.

The agitating bin 10 is configured as a cylindrical structure as a whole, with an agitating bin opening 11 disposed on the top thereof and an agitating bin inspection port 14 disposed on the lateral side. The feeding bin 20 is located below the agitating bin 10, and the top of the feeding bin 20 is provided with an inlet 21 communicated with the bottom of the agitating bin 10. The agitating bin 10 may receive incoming material through the agitating bin opening 11, and then delivers the material to the feeding bin 20, acting as a buffer between a source of the powder material and the feeding bin 20 to ensure that the feeding bin 20 offers continuous and stable supply of the powder material. Preferably, the cross sections of the agitating bin opening 11 and the internal space of the agitating bin 10 are approximately the same, so that a straight-through feeding cylinder is formed. In this way, the size of the agitating bin opening 11 can be increased to a maximum extent, thereby increasing the amount of powder received by the agitating bin 10, stabilizing the incoming material, and reducing the possibility of the interruption of feeding.

Generally, the agitating bin 10 has a vertical axis AX. The following depictions are presented by taking a direction along the vertical axis as a height direction and taking a direction perpendicular to the vertical axis as a radial direction. The powder material at a position in the agitating bin 10 facing exactly the inlet 21 of the feeding bin 20 and its surrounding area easily enter the feeding bin through the inlet 21. The powder material at positions away from the inlet 21, particularly the powder material at a position opposed to the inlet 21 in the radial direction is apt to pile up to form a dead spot. The piled powder occupies the space in the agitating bin 10, and reduces the fluidity of the powder material so that the feeding conditions become poor. Hence, an agitating device 12 is disposed in the agitating bin 10. The agitating device 12 may rotate about the vertical axis AX of the agitating bin 10 and agitate the powder material in the agitating bin 10. Through agitation, the powder material may maintain excellent fluidity in the agitating bin 10 to facilitate delivery, thereby avoiding occurrence of unfavorable conditions such as dead spots and agglomeration caused by the pile-up of the powder material at positions away from the inlet 21.

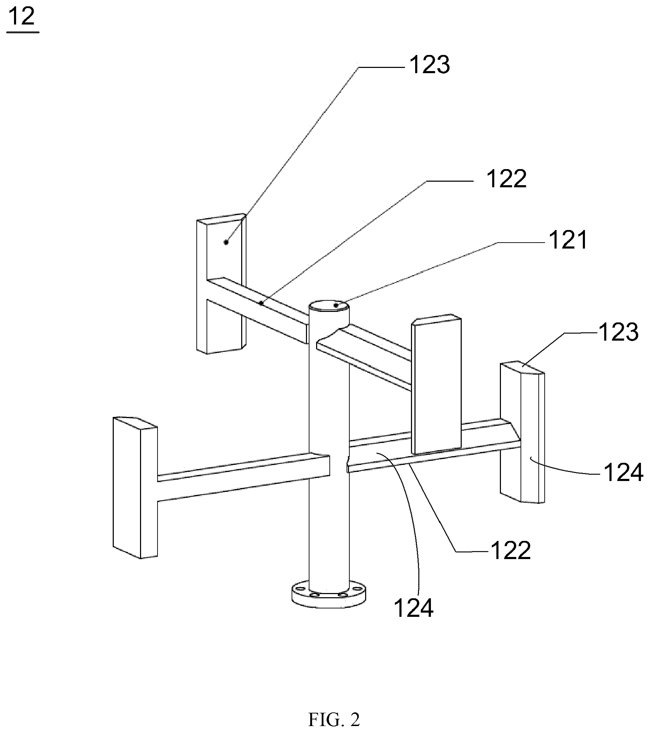

As shown in Fig. 2, the agitating device 12 includes an agitating shaft 121 and an agitating rod 122. Wherein, the agitating shaft 121 is vertically disposed in the agitating bin 10 and defines the vertical axis AX. The agitating rod 122 is connected to the agitating shaft 121 and extends radially with the agitating shaft 121 as a center. Preferably, in the illustrated example, the agitating device 12 includes two sets of agitating rods 122. Each set includes two agitating rods 122 arranged symmetrically about the vertical axis AX. The agitating rods 122 in the same set are located in the same horizontal plane, and the agitating rods 122 in different sets are spaced in the height direction. As such, the powder materials at different height positions in the agitating bin 10 may be stirred, and the agitating effect can be optimized. Preferably, the agitating rods 122 of different sets are staggered in the circumferential direction around the vertical axis AX. Such an arrangement enables simultaneous agitation of the powder material at different circumferential positions, so that the agitation is more uniform, and the effect is more obvious especially when the number of agitating rods 122 in each set is small. It may be appreciated that in other embodiments, the agitating device may include three or more sets of agitating rods, and/or each set may include three or more agitating rods, and the number of agitating rods in different sets may be the same or different.

Preferably, the agitating device 12 further includes a wall scraping plate 123. The wall scraping plate 123 is disposed at an end of the agitating rod 122 and is perpendicular to the agitating rod 122. When the agitating device 12 rotates around the vertical axis AX, the wall scraping plate 123 may scrape the powder material adhered to the inner wall surface of the agitating bin 10 through a larger contact area than the agitating rod 122 to prevent the powder material from adhering to the inner wall surface and piling up to form the dead spots.

Preferably, the agitating rods 122 and the wall scraping plate 123 are all provided with a resistance reducing structure 124 on a front side in the rotation direction to reduce the resistance caused by the powder material to the agitating device 12, the resistance reducing structure having a thickness gradually reducing in the rotation direction. In the illustrated example, the resistance reducing structure 124 is specifically a chamfered structure disposed on the agitating rods 122 and the wall scraping plate 123. It can be understood that, in other embodiments, the resistance reducing structure may also be a structure such as a separately manufactured elongated triangular prism and fixed to the agitating rod or the wall scraping plate. Certainly, it is also possible to provide the above-mentioned resistance reducing structure only on one of the agitating rod and the wall scraping plate.

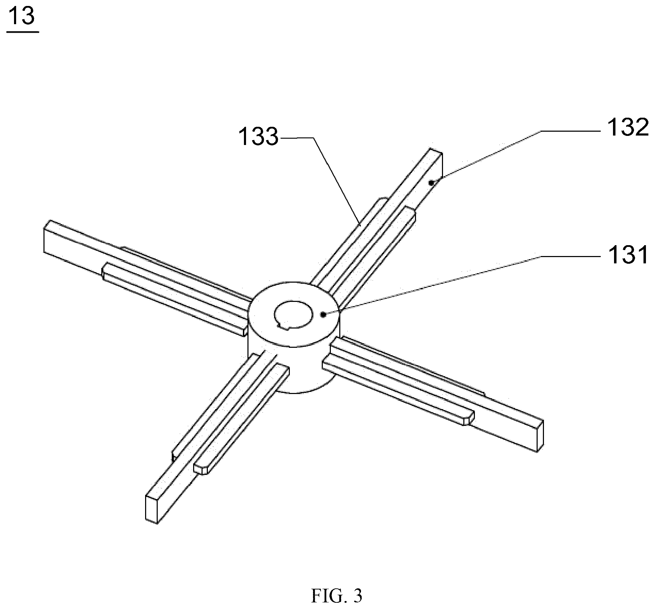

Further, a sweeping device 13 capable of rotating around the vertical axis AX is also provided in the agitating bin 10. Referring to FIG. 1 and FIG. 3, the sweeping device 13 including a sweeping sleeve 131 and a sweeping blade 132 is disposed below the agitating device 12. The sweeping sleeve 131 defines a rotation axis of the sweeping device 13, and the rotation axis coincides with the vertical axis AX. That is, the sweeping sleeve 131 and the agitating shaft 121 of the agitating device 12 are arranged coaxially. The sweeping blade 132 is connected to the sweeping sleeve 131 and extends radially relative to the rotation axis defined by the sweeping sleeve 131. The sweeping blade 132 abuts against a bottom wall of the agitating bin 10. Upon rotation, the sweeping device 13 may sweep the powder material on the bottom wall of the agitating bin 10 at a position opposed to the inlet 21 of the feeding bin 20 in the radial direction into the feeding bin 21, to avoid the dead spots caused by the pile-up of the powder material. Furthermore, the sweeping device 13 may also perform the same agitating function as the agitating device 12 to a certain extent. Preferably, the sweeping blades 132 are symmetrically arranged around the rotation axis. In the illustrated example, the sweeping device 13 includes four sweeping blades 132 arranged at a 90° interval therebetween. Preferably, the sweeping blades 132 are in the shape of an elongated plate, with the surface of the plate being parallel to the vertical axis AX. A reinforcing rib 133 is disposed on one or both sides of the surface of the plate to increase its structural strength.

An internal space of the agitating bin 10 and an internal space of the feeding bin 20 are spaced apart by a feeding bin top wall 24, and the two spaces are communicated through the inlet 21 provided on the feeding bin top wall 24. That is, the feeding bin top wall 24 is simultaneously the bottom wall of the agitating bin 10, and the inlet 21 is simultaneously the outlet of the agitating bin 10. Such an arrangement can make the structure simpler and more compact.

As shown in Fig. 1, the bottom of the feeding bin 20 is provided with an outlet 22 which is staggered from the inlet 21 in the circumferential direction around the vertical axis AX. In the preferred example shown in Fig. 1, the outlet 22 and the inlet 21 are radially opposite. Furthermore, a feeding impeller 23 capable of rotating around the vertical axis AX is disposed in the interior of the feeding bin 20 and used for transferring the powder material falling from the inlet 21 to the outlet 22 and delivering the powder material to a target position, for example, to other conveying devices downstream of the stabilizing flow feeder. A discharge pipe 50 docked with the outlet 22 is disposed below the feeding bin 20 to facilitate the docking with a powder material receiving device and prevent the powder material from leaking and escaping to the external and causing dust pollution. A discharge pipe inspection port 51 is provided on a lateral side of the discharge pipe 50.

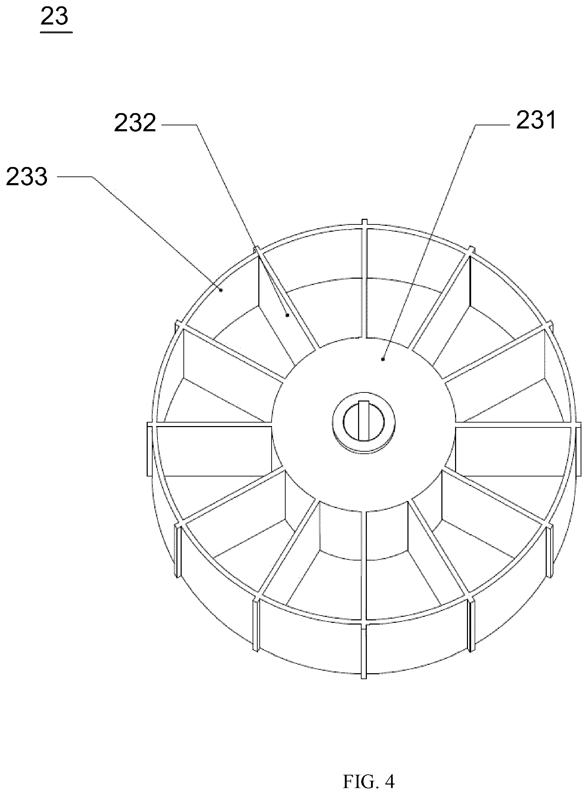

As shown in Fig. 4, the feeding impeller 23 includes an impeller sleeve 231, a blade 232 and a rim 233. The impeller sleeve 231 is coaxially arranged with the sweeping sleeve 131 of the sweeping device 13 and the agitating shaft 121 of the agitating device 12, and the three jointly define the vertical axis AX. The blade 232 includes a plurality of blades which are connected to the impeller sleeve 231 and extend radially outward with the impeller sleeve 231 as the center. The rim 233 connects the ends of adjacent blades 232. Two adjacent blades 232, the impeller sleeve 231, and the rim 233 collectively surround a substantially fan-shaped section or fan annular section (hereinafter collectively referred to as "section"). When the feeding impeller 23 rotates, the powder material falling from the inlet 21 enters the section and rotates with the feeding impeller 23, and when the section is aligned with the outlet 22, the powder material falls from the outlet 22 to complete the feeding. Preferably, the plurality of blades 232 are evenly spaced apart in the circumferential direction around the vertical axis AX. Therefore, each section has approximately the same volume. With this arrangement, the amount of powder material conveyed by the stabilizing flow feeder can be adjusted by adjusting the rotation speed of the feeding impeller 23, and accurate metering can be achieved.

The inlet 21 is preferably set with a larger size, so that the amount of powder material entering the feeding bin 20 is stable and sufficient. The stable supply of the incoming material into the feeding bin 20 facilitates keeping the powder material filling rate in each section of the feeding impeller 23 stable. In one embodiment, the opening size of the inlet 21 in the radial direction perpendicular to the vertical axis AX may be set to 200 mm to 3000 mm. Further preferably, the opening size of the inlet 21 in a radial direction may be set to 700 mm to 1100 mm, and specifically may be 800 mm, 900 mm, 1000 mm, or the like. The opening angle of the inlet 21 in a circumferential direction around the vertical axis AX may be set to 30° to 300°, and specifically may be 150° or 210°.

In some working conditions, a delivery device located downstream of the stabilizing flow feeder delivers the powder material in a positive pressure pneumatic delivery manner. Therefore, a delivery air flow is prone to be blown reversely through the outlet 22 into the feeding bin 20. The powder material is liable to transfer between different sections under the blowback air flow, which leads to situations such as material flush and running of the powder material through the bin. Preferably, in the present example, the gap between the feeding impeller 232 and the feeding bin top wall 24, a feeding bin bottom wall 25 and a feeding bin side wall 26 is not greater than 2 mm. The small gap allows the powder material to be filled therein, achieving a shielding effect, so that the powder material can be retained in the sections, and the material flush and the running of the powder material through the bin can be reduced. This facilitates the feeding impeller 23 to maintain a uniform feed amount.

Further, the stabilizing flow feeder 1 further includes an air flow-assisting device 30 which is in air communication with the internal space of the feeding bin 20, and which has a flow-assisting air path disposed on top of the feeding bin 20. The flow-assisting air path is capable of generating, from above the outlet 22, a flow-assisting air flowing outward through the outlet 22. Therefore, when the section of the feeding impeller 23 moves past the outlet 22, the flow-assisting air acts on the powder material in the section, and the acting force may be superimposed with gravity to provide the powder material with a downward initial velocity to overcome an upward blowback action generated by the delivery air flow of the downstream delivery device through the outlet 22, so that the powder material can smoothly enter the downstream delivery device from the stabilizing flow feeder, such that the stabilizing flow feeder feeds stably and the feeding metering is accurate. The flow-assisting air path may be communicated with an air source such as an air compressor to generate the above flow-assisting air.

As shown in Fig. 1, the feeding bin top wall 24 is provided with an air flow passage 31, and a plurality of air outlets 32 communicated with the air flow passage 32 are disposed at a position of the feeding bin top wall 24 aligned with the outlet 22. The plurality of air outlets 32 are preferably arranged evenly relative to the outlet 22, so that the flow-assisting air blown out of the air outlets is applied more evenly to the powder material. The air flow-assisting device 30 generates the flow-assisting air from the air outlets 32 through the air flow channel 31 toward the outlet 22. In other words, the air flow passage 31 and the air outlets 32 constitute at least a portion of the flow-assisting air path of the air flow-assisting device 30, that is, at least a portion of the flow-assisting air path is disposed in the feeding bin top wall 24. As such, it is possible to avoid directly disposing the flow-assisting air path in the internal space of the feeding bin 20, avoiding interference between the flow-assisting air path from and the rotation of the feeding impeller 23, which facilitates reducing the gap between the feeding impeller 23 and the feeding bin top wall 24, and makes the structure compact.

The driving device 40 is disposed below the feeding bin 20. In the illustrated example, the driving device 40 is configured as an electric motor. The driving device 40 is coupled to the driving sleeve 41, and the driving sleeve 41 is coupled to the driving spindle 41 in the feeding bin 20. The impeller sleeve 231 of the feeding impeller 23 is sleeved on the driving spindle 41. The driving spindle 41 further extends into the agitating bin 10, the sweeping sleeve 131 of the sweeping device 13 is sleeved on the driving spindle 41, and the agitating shaft 121 of the agitating device 12 is coupled to the driving spindle 41. As such, the transmission connection between the driving device 40 and the feeding impeller 23, the sweeping device 13 and the agitating device 12 is realized.

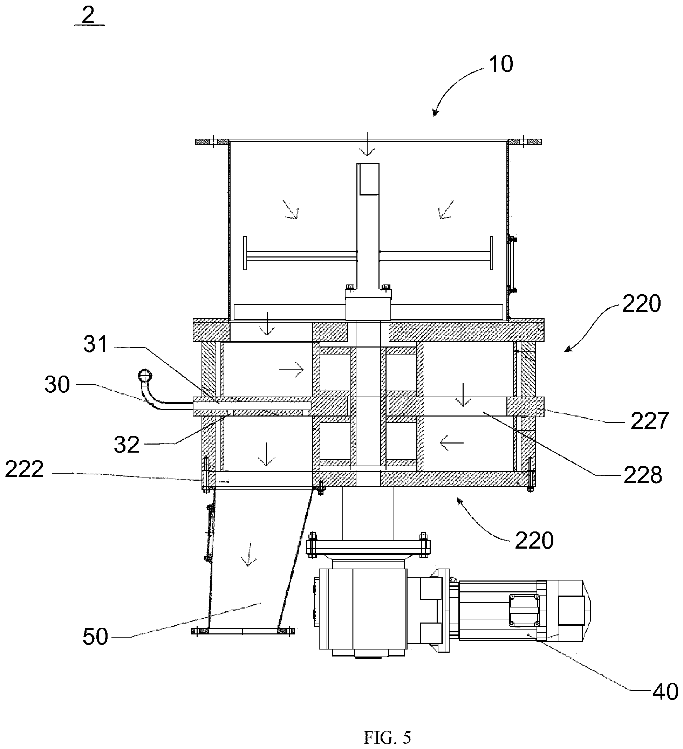

Fig. 5 shows a stabilizing flow feeder 2 according to a first embodiment of the present invention. Except for the structure of a feeding bin 220, the stabilizing flow feeder 2 according to the first embodiment has substantially the same configuration as the stabilizing flow feeder 1 according to the first example, wherein the same function structures are denoted by the same reference signs. For the sake of brevity, only the distinguishing features will be introduced in detail, and the similarities will not be repeated.

In the first embodiment, the stabilizing flow feeder 2 includes at least two feeding bins 220. The at least two feeding bins 220 are stacked in an up-and-down direction. In the two adjacent feeding bins 220, the outlet of the upper feeding bin 220 is communicated with the inlet of the lower feeding bin 220. The inlet of the uppermost feeding bin 220 is communicated with the agitating bin 10. The flow-assisting air path (including the air flow passage 31 and the air outlets 32) of the air flow-assisting device 30 is disposed on the top of the lowermost feeding bin 220.

Specifically, as shown in Fig. 5, the stabilizing flow feeder 2 includes two feeding bins 220. The internal spaces of the upper and lower feeding bins 220 are partitioned by a feeding bin partition plate 227, and are communicated through a partition plate opening 228 on the feeding bin partition plate 227. In other words, the feeding bin partition plate 227 simultaneously serves as the bottom wall of the upper feeding bin 220 and the top wall of the lower feeding bin 220, and the partition plate opening 228 simultaneously serves as the outlet of the upper feeding bin 220 and the inlet of the lower feeding bin 220. Such an arrangement may make the structure simpler and more compact. Furthermore, such an arrangement may avoid the impact on the passing area of the powder material caused by failure of complete alignment of the outlet and the inlet due to different shapes of the outlet of the upper feeding bin 220 and the inlet of the lower feeding bin 220 or nonalignment of angles by which the outlet and inlet are disposed, and facilitate enabling the powder material to smoothly flow and transfer between multiple layers of feeding bins 220.

Multiple layers of feeding bins 220 are provided, and the inlet and outlet of each feeding bin 220 are staggered, which forms a meandering air flow path in the feeding bin 220. The pressure of the air flow that is blown back into the feeding bin 220 through the lowermost outlet 222 gradually reduces as the air flows along the air flow path. At the same time, the amount of powder material contained in the feeding bin 220 increases, which creates a greater resistance to the blown-back air flow. Therefore, the stabilizing flow feeder according to the first embodiment can better alleviate phenomena such as material flush and running of the powder material through the bin, providing a better material-retaining effect, being adapted for an occasion with a higher material-retaining requirement upon delivery of the powder material with air.

The foregoing description on the various embodiments of the present disclosure has been presented to those skilled in the relevant fields for purposes of illustration, but are not intended to be exhaustive or limited to a single embodiment disclosed herein. As aforementioned, many substitutions and variations will be apparent to those skilled in the art. Therefore, although some alternative embodiments have been described above, those skilled in the art can still envision or develop other embodiments much more easily. The present disclosure is intended to cover all substitutions, modifications and variations of the present disclosure falling into the scope of the appended set of claims.

## Claims

1. A stabilizing flow feeder, wherein the feeder comprises:
an agitating bin (10) provided with an upward opening (11) at the top and configured to receive powder material, an agitating device (12) rotatable about a vertical axis of the agitating bin (10) being disposed in an interior of the agitating bin (10);
a feeding bin (220) located below the agitating bin (10), a top of the feeding bin (220) being provided with an inlet communicated with a bottom of the agitating bin (10), a bottom of the feeding bin (220) being provided with an outlet (222), an interior of the feeding bin (220) being provided with a feeding impeller (23) rotatable about the vertical axis, the inlet and the outlet (222) being staggered in a circumferential direction around the vertical axis;
a driving device (40) configured to drive the agitating device (12) and the feeding impeller (23) to rotate; and
an air flow-assisting device (30) having a flow-assisting air path (31, 32) disposed in a top wall of the feeding bin (220), the flow-assisting air path being air-communicated with the feeding bin (220) and configured to generate, from above the outlet (222), a flow-assisting air flowing outward through the outlet (222),
**characterized in that**
the stabilizing flow feeder comprises at least two feeding bins (220) which are disposed stacked in an up-and-down direction, the outlet of an upper feeding bin (220) is communicated with the inlet of a lower feeding bin (220), and the flow-assisting air path (31, 32) is disposed in the lowermost feeding bin.

2. The stabilizing flow feeder according to claim 1, wherein the agitating device (12) comprises an agitating shaft (121) and at least two sets of agitating rods (122) extending radially with the agitating shaft (121) as a center, wherein the agitating rods (122) in different sets are disposed spaced-apart in a height direction of the vertical axis.

3. The stabilizing flow feeder according to claim 2, wherein an end of the agitating rod (122) is provided with a wall scraping plate (123) perpendicular to the agitating rod (122).

4. The stabilizing flow feeder according to claim 3, wherein the agitating rod (122) and/or the wall scraping plate (123) are provided with a resistance reducing structure (124) on their respective front sides in a rotation direction.

5. The stabilizing flow feeder according to any one of claims 1-4, wherein a sweeping device (13) capable of rotating around the vertical axis is further provided in the agitating bin (10), the sweeping device (13) is disposed below the agitating device (12) and includes sweeping blades (132) disposed symmetrically about the vertical axis, and the sweeping blades (132) abut against a bottom wall of the agitating bin.

6. The stabilizing flow feeder according to claim 5, wherein the sweeping device comprises a sweeping sleeve (131), and the sweeping blades (132) are connected to the sweeping sleeve (131) and extend radially with the sweeping sleeve (131) as a center.

7. The stabilizing flow feeder according to claim 1, wherein the feeding impeller comprises:
an impeller sleeve (231);
a plurality of blades (232) extending radially with the impeller sleeve (231) as a center; and
a rim (233) connected to ends of adjacent blades (232) to form a fan-shaped or a fan annular-shaped section.

8. The stabilizing flow feeder according to claim 7, wherein gaps between the feeding impeller (239 and a bottom wall, a top wall and a side wall of the feeding bin (220) are not greater than 2 mm.

9. The stabilizing flow feeder according to claim 1, wherein an opening angle of the inlet in a circumferential direction around the vertical axis is in a range of 30° to 300°, and/or a size of the inlet in a radial direction perpendicular to the vertical axis is in a range of 200 mm to 3000 mm.

10. The stabilizing flow feeder according to claim 1, wherein an air flow passage (31) is disposed in a top wall of the lowermost feeding bin (220) of the stabilizing flow feeder, air outlets (32) communicated with the air flow passage (31) are disposed at a position of the top wall aligned with the outlet, and the air flow passage (31) and the air outlets (32) constitute at least a portion of the flow-assisting air path.

## Patentansprüche

1. Stabilisierender Stromzuführer, wobei der Zuführer Folgendes umfasst:
einen Rührbehälter (10), der oben mit einer nach oben weisenden Öffnung (11) versehen und dazu ausgelegt ist, ein Pulvermaterial aufzunehmen, eine Rührvorrichtung (12), die um eine vertikale Achse des Rührbehälters (10) drehbar und in einem Innenraum des Rührbehälters (10) angeordnet ist;
einen Zufuhrbehälter (220), der sich unter dem Rührbehälter (10) befindet, wobei ein oberes Ende des Zufuhrbehälters (220) mit einem Einlass versehen ist, der mit einem Boden des Rührbehälters (10) kommuniziert, wobei ein Boden des Zufuhrbehälters (220) mit einem Auslass (222) versehen ist, ein Innenraum des Zufuhrbehälters (220) mit einem Zufuhrlaufrad (23) versehen ist, das um die vertikale Achse drehbar ist, wobei der Einlass und der Auslass (222) in einer Umfangsrichtung um die vertikale Achse abgestuft sind;
eine Antriebsvorrichtung (40), die dazu ausgelegt ist, die Rührvorrichtung (12) und das Zufuhrlaufrad (23) zum Drehen anzutreiben; und
eine Luftstromunterstützungsvorrichtung (30) mit einem Stromunterstützungsluftpfad (31, 32), der in einer oberen Wand des Zufuhrbehälters (220) angeordnet ist, wobei der Stromunterstützungsluftpfad mit dem Zufuhrbehälter (220) luftkommuniziert und dazu ausgelegt ist, von oberhalb des Auslasses (222) eine Stromunterstützungsluft zu erzeugen, die durch den Auslass (222) nach außen strömt,
**dadurch gekennzeichnet, dass**
der stabilisierende Stromzuführer mindestens zwei Zufuhrbehälter (220) umfasst, die in einer Auf-Ab-Richtung gestapelt sind, der Auslass des oberen Zufuhrbehälters (220) mit dem Einlass des unteren Zufuhrbehälters (220) kommuniziert und der Stromunterstützungsluftpfad (31, 32) im untersten Zufuhrbehälter angeordnet ist.

2. Stabilisierender Stromzuführer nach Anspruch 1, wobei die Rührvorrichtung (12) eine Rührwelle (121) und mindestens zwei Sätze von Rührstäben (122) umfasst, die sich mit der Rührwelle (121) als eine Mitte radial erstrecken, wobei die Rührstäbe (122) in verschiedenen Sätzen in einer Höhenrichtung der vertikalen Achse beabstandet angeordnet sind.

3. Stabilisierender Stromzuführer nach Anspruch 2, wobei ein Ende des Rührstabs (122) senkrecht zum Rührstab (122) mit einer Wandabstreifplatte (123) versehen ist.

4. Stabilisierender Stromzuführer nach Anspruch 3, wobei der Rührstab (122) und/oder die Wandabstreifplatte (123) in einer Drehrichtung auf ihrer jeweiligen Vorderseite mit einer Widerstandsverringerungsstruktur (124) versehen ist.

5. Stabilisierender Stromzuführer nach einem der Ansprüche 1 bis 4, wobei im Rührbehälter (10) ferner eine Kehrvorrichtung (13) bereitgestellt ist, die in der Lage ist, sich um die vertikale Achse zu drehen, wobei die Kehrvorrichtung (13) unter der Rührvorrichtung (12) angeordnet ist und Kehrblätter (132) beinhaltet, die symmetrisch um die vertikale Achse angeordnet sind, und die Kehrblätter (132) an einer Bodenwand des Rührbehälters anlegen.

6. Stabilisierender Stromzuführer nach Anspruch 5, wobei die Kehrvorrichtung eine Kehrhülse (131) umfasst, und die Kehrblätter (132) mit der Kehrhülse (131) verbunden sind und sich mit der Kehrhülse (131) als eine Mitte radial erstrecken.

7. Stabilisierender Stromzuführer nach Anspruch 1, wobei das Zufuhrlaufrad Folgendes umfasst:
eine Laufradhülse (231);
eine Vielzahl von Blättern (232), die sich mit der Laufradhülse (231) als eine Mitte radial erstrecken; und
einen Rand (233), der mit Enden von benachbarten Blättern (232) verbunden ist, um einen fächerförmigen oder ringförmigen Fächerbereich zu bilden.

8. Stabilisierender Stromzuführer nach Anspruch 7, wobei Spalte zwischen dem Zufuhrlaufrad (239) und einer Bodenwand, einer oberen Wand und einer Seitenwand des Zufuhrbehälters (220) nicht größer sind als 2 mm.

9. Stabilisierender Stromzuführer nach Anspruch 1, wobei ein Öffnungswinkel des Einlasses in einer Umfangsrichtung um die vertikale Achse in einem Bereich von 30° bis 300° liegt, und/oder eine Größe des Einlasses in einer Radialrichtung senkrecht zur vertikalen Achse in einem Bereich von 200 mm bis 3000 mm liegt.

10. Stabilisierender Stromzuführer nach Anspruch 1, wobei in einer oberen Wand des untersten Zufuhrbehälters (220) des stabilisierenden Stromzuführers ein Luftstromkanal (31) angeordnet ist, Luftauslässe (32), die mit dem Luftstromkanal (31) kommunizieren, in einer Position der oberen Wand, die auf den Auslass ausgerichtet ist, angeordnet sind, und der Luftstromkanal (31) und die Luftauslässe (32) mindestens einen Abschnitt des Stromunterstützungsluftpfades konstituieren.

## Revendications

1. Dispositif d'alimentation d'écoulement de stabilisation, dans lequel le dispositif d'alimentation comprend :
un bac d'agitation (10) prévu avec une ouverture vers le haut (11) au sommet et configuré pour recevoir un matériau en poudre, un dispositif d'agitation (12) pouvant tourner autour d'un axe vertical du bac d'agitation (10) qui est disposé dans un intérieur du bac d'agitation (10) ;
un bac d'alimentation (220) positionné au-dessous du bac d'agitation (10), un sommet du bac d'alimentation (220) étant prévu avec une entrée en communication avec un fond du bac d'agitation (10), un fond du bac d'alimentation (220) étant prévu avec une sortie (222), un intérieur du bac d'alimentation (220) étant prévu avec une roue d'alimentation (23) pouvant tourner autour de l'axe vertical, l'entrée et la sortie (222) étant en quinconce dans une direction circonférentielle autour de l'axe vertical ;
un dispositif d'entraînement (40) configuré pour entraîner le dispositif d'agitation (12) et la roue d'alimentation (23) à tourner ; et
un dispositif d'assistance d'écoulement d'air (30) ayant une trajectoire d'air d'assistance d'écoulement (31,32) disposée dans une paroi supérieure du bac d'alimentation (220), la trajectoire d'air d'assistance d'écoulement étant en communication par air avec le bac d'alimentation (220) et configurée pour générer, depuis le dessus de la sortie (222), un air d'assistance d'écoulement s'écoulant vers l'extérieur à travers la sortie (222),
**caractérisé en ce que** :
le dispositif d'alimentation d'écoulement de stabilisation comprend au moins deux bacs d'alimentation (220) qui sont disposés par empilement dans une direction de haut en bas, la sortie du bac d'alimentation supérieur (220) est en communication avec l'entrée d'un bac d'alimentation inférieur (220), et la trajectoire d'air d'assistance d'écoulement (31,32) est disposée dans le bac d'alimentation le plus bas.

2. Dispositif d'alimentation d'écoulement de stabilisation selon la revendication 1, dans lequel le dispositif d'agitation (12) comprend un arbre d'agitation (121) et au moins deux ensembles de tiges d'agitation (122) s'étendant radialement avec l'arbre d'agitation (121) en tant que centre, dans lequel les tiges d'agitation (122) dans différents ensembles sont disposées espacées dans une direction de hauteur de l'axe vertical.

3. Dispositif d'alimentation d'écoulement de stabilisation selon la revendication 2, dans lequel une extrémité de la tige d'agitation (122) est prévue avec une plaque de raclage de paroi (123) perpendiculaire à la tige d'agitation (122).

4. Dispositif d'alimentation d'écoulement de stabilisation selon la revendication 3, dans lequel la tige d'agitation (122) et/ou la plaque de raclage de paroi (123) sont prévues avec une structure de réduction de résistance (124) sur leurs côtés avant respectifs dans une direction de rotation.

5. Dispositif d'alimentation d'écoulement de stabilisation selon l'une quelconque des revendications 1 à 4, dans lequel un dispositif de balayage (13) pouvant tourner autour de l'axe vertical est en outre prévu dans le bac d'agitation (10), le dispositif de balayage (13) est disposé au-dessous du dispositif d'agitation (12) et comprend des lames de balayage (132) disposées de manière symétrique autour de l'axe vertical, et les lames de balayage (132) viennent en butée contre une paroi inférieure du bac d'agitation.

6. Dispositif d'alimentation d'écoulement de stabilisation selon la revendication 5, dans lequel le dispositif de balayage comprend un manchon de balayage (131), et les lames de balayage (132) sont raccordées au manchon de balayage (131) et s'étendent radialement avec le manchon de balayage (131) en tant que centre.

7. Dispositif d'alimentation d'écoulement de stabilisation selon la revendication 1, dans lequel la roue d'alimentation comprend :
un manchon de roue (231) ;
une pluralité de lames (232) s'étendant radialement avec le manchon de roue (231) en tant que centre ; et
un rebord (233) raccordé aux extrémités des lames (232) adjacentes afin de former une section en forme d'éventail ou une section de forme annulaire d'éventail.

8. Dispositif d'alimentation d'écoulement de stabilisation selon la revendication 7, dans lequel des interstices entre la roue d'alimentation (239) et une paroi inférieure, une paroi supérieure et une paroi latérale du bac d'alimentation (220) ne sont pas supérieurs à 2 mm.

9. Dispositif d'alimentation d'écoulement de stabilisation selon la revendication 1, dans lequel un angle d'ouverture de l'entrée dans une direction circonférentielle autour de l'axe vertical est dans une plage de 30° à 300°, et/ou une dimension de l'entrée dans une direction radiale perpendiculaire à l'axe vertical est dans une plage de 200 mm à 3000 mm.

10. Dispositif d'alimentation d'écoulement de stabilisation selon la revendication 1, dans lequel un passage d'écoulement d'air (31) est disposé dans une paroi supérieure du bac d'alimentation le plus bas (220) du dispositif d'alimentation d'écoulement de stabilisation, les sorties d'air (32) en communication avec le passage d'écoulement d'air (31) sont disposées dans une position de la paroi supérieure alignée avec la sortie, et le passage d'écoulement d'air (31) et les sorties d'air (32) constituent au moins une partie de la trajectoire d'air d'assistance d'écoulement.
